# EUROPÄISCHE PATENTSCHRIFT

(11) **EP 3 124 293 B1**
(45) Veröffentlichungstag und Bekanntmachung des Hinweises auf die Patenterteilung: **13.03.2019**
(21) Anmeldenummer: 15179080.5
(22) Anmeldetag: 30.07.2015
(51) Int. Cl.: B60C 17/06

(54) **NOTLAUFEINSATZ**
RUN FLAT SUPPORT
INSERT DE ROULAGE A PLAT

(43) Veröffentlichungstag der Anmeldung: 01.02.2017
(73) Patentinhaber: Europlast-Nycast GmbH, 42551 Velbert-Röbbeck (DE)
(72) Erfinder: Seelig, Hans-Georg, 45149 Essen (DE)
(74) Vertreter: Dr. Stark & Partner Patentanwälte mbB

(56) Entgegenhaltungen:
- EP-A1- 0 226 967
- EP-A1- 2 141 032
- EP-A1- 2 682 287
- JP-A- S58 141 903
- US-A- 3 451 457
- US-A1- 2005 056 355

## Beschreibung

Die Erfindung betrifft einen verspannbaren Notlaufeinsatz für ein aus einer Felge und einem luftgefüllten Reifen, der beidseitig jeweils eine Reifenwulst hat und mit diesen beiden Reifenwülsten auf der Felge angeordnet ist, bestehendes Kraftfahrzeugrad, mit wenigstens zwei, insbesondere drei, kreisringsegmentförmigen Teilelementen, wobei aneinandergrenzende Teilelemente jeweils entweder gelenkig miteinander verbunden sind oder über ein Spannsystem miteinander verspannbar sind.
Aus der Praxis sind derartige Systeme in verschiedensten Ausprägungen bekannt (Siehe JP-A-358141903, US-A-20050056355 oder US-A-3451457). Nachteilig hierbei ist, dass bei abgesenktem Luftdruck im Inneren des Reifens, so wie er beispielsweise bei Gelände- und Sandfahrten zur Vergrößerung der Aufstandsfläche und einer besseren Traktion häufig Anwendung findet, die Reifenwülste nicht mehr sicher an der Felgenschulter gehalten sind, so dass Sand und/oder Schmutz eindringen kann. Dies führt über kurz oder lang jedoch unweigerlich zu Beschädigungen.
Aufgabe der Erfindung ist es, die vorgenannten Nachteile zu vermeiden und eine Möglichkeit anzugeben, mit der das Eindringen von Schmutz unabhängig vom Luftdruck im Reifen sicher verhindert wird.
Diese Aufgabe wird bei einem gattungsgemäßen Notlaufeinsatz dadurch gelöst, dass der Querschnitt der Teilelemente reifenseitig T-förmig ausgebildet ist, wobei der Querbalken der T-förmigen Ausgestaltung als Lauffläche für den Reifen bei einem Reifendefekt dient und der Querschnitt der Teilelemente felgenseitig in etwa T-förmig mit zwei seitlichen Endpunkten ausgebildet ist, wobei der Querbalken der T-förmigen Ausgestaltung zur Montage auf dem Felgenbett dient und in montiertem Zustand auf diesem aufliegt, wobei die reifenseitige T-förmige Ausgestaltung und die felgenseitige T-förmige Ausgestaltung, insbesondere über einen radial verlaufenden Steg, miteinander verbunden sind, wobei die seitlichen Endpunkte des Querbalkens der felgenseitigen T-förmigen Ausgestaltung durch zumindest einen zwischen den beiden Endpunkten des Querbalkens vorgesehenen, elastisch ausgeprägten Teilbereich gegen eine Rückstellkraft aufeinander zu verlagerbar sind. Hierdurch sind bei montiertem Reifen die Reifenwülste durch den insoweit resultierenden Anpressdruck seitens der seitlichen Endpunkte des Querbalkens der felgenseitigen T-förmigen Ausgestaltung sicher an der Felgenschulter gehalten.

Dabei ist zumindest ein elastisch ausgeprägter Teilbereich als ein mäanderförmig verlaufender Federbereich ausgebildet, so dass beispielsweise durch Formguss ein entsprechender Notlaufeinsatz einfach herstellbar ist. Der Federbereich kann dabei entlang der Längserstreckung des Notlaufeinsatzes verlaufend ausgebildet sein, also umlaufend mit gleicher Kontur versehen sein.

Auch ist der mäanderförmig verlaufende Federbereich durch zumindest zwei jeweils entgegengesetzt verlaufende, vorzugsweise schräg angestellte, Einschnitte gebildet.

Auch weist das Material der Teilelemente eine Bruchfestigkeit von 20 bis 60 MPa, insbesondere von ca. 47 MPa, auf und/oder hat eine Härte von ca. 50 bis 80 Shore D, insbesondere von ca. 74 Shore D.

Zudem beträgt die Strecke der Verlagerung, also der "Federweg", der beiden Endpunkte des Querbalkens gegen die Rückstellkraft aufeinander zu ca. 2 bis 20 mm, vorteilhafterweise 4 bis 16 mm und vorzugsweise 6 bis 12 mm.

Vorzugsweise können die Teilelemente aus einem Gussmaterial, insbesondere aus Kunststoff und/oder aus einem Kompositwerkstoff, bestehen.
Vorzugsweise kann das Material der Teilelemente nur ein geringes Rückstellvermögen haben, so dass eine ausreichende Stabilität und Belastbarkeit gegeben ist.
Das Material der Teilelemente kann beispielsweise ein Zug-E-Modul von 1000 bis 2000 MPa, insbesondere von ca. 1512 MPa, haben und/oder eine Bruchdehnung von 100 bis 400 %, insbesondere von ca. 270 %, aufweisen.
Erfindungsgemäß können zumindest die Querbalken der felgenseitigen T-förmigen Ausgestaltung der Teilelemente, vorzugsweise die gesamten Teilelemente, in denjenigen Endbereichen ihrer Längserstreckung, in denen sie miteinander verbunden und/oder verspannt sind, eine geringere Breite aufweisen als in den restlichen zwischen diesen Endbereichen liegenden Bereichen. Somit sind die Bereiche der Teilelemente, in denen sie miteinander verbunden und/oder verspannt sind, keinen oder zumindest nur geringeren seitlichen Belastungen ausgesetzt.
Dabei kann die geringere Breite 2 bis 20 mm, vorteilhafterweise 4 bis 16 mm und vorzugsweise 6 bis 12 mm, betragen. Dies kann insbesondere dem "Federweg" der der beiden Endpunkte des Querbalkens gegen die Rückstellkraft aufeinander zu entsprechen.
Die Erfindung betrifft weiterhin ein Kraftfahrzeugrad mit einer Felge, mit einem luftgefüllten Reifen, der beidseitig jeweils eine Reifenwulst hat und mit diesen beiden Reifenwülsten auf der Felge angeordnet ist, und mit einem innerhalb des Reifens auf der Felge angeordneten verspannbaren Notlaufeinsatz.
Zur Lösung der eingangs genannten, der Erfindung zugrundeliegenden Problemstellung soll ein erfindungsgemäßer Notlaufeinsatz Verwendung finden.

Die Felge kann dabei eine mehrteilige Flachbettfelge sein. Auch kann die Felge mit einem Beadlock-System versehen sein.

Erfindungsgemäß können die seitlichen Endpunkte des Querbalkens der felgenseitigen T-förmigen Ausgestaltung der Teilelemente jeweils an der entsprechenden Reifenwulst mit Druck angepresst anliegen.

Alternativ kann zumindest zwischen einem der beiden seitlichen Endpunkte des Querbalkens der felgenseitigen T-förmigen Ausgestaltung der Teilelemente und der jeweiligen entsprechenden angrenzenden Reifenwulst ein ringförmiges, vorzugsweise aus Edelstahl oder einem Polyolefin oder PTFE bestehendes, Zwischenelement vorgesehen sein, wobei die seitlichen Endpunkte des Querbalkens der felgenseitigen T-förmigen Ausgestaltung der Teilelemente jeweils an der einen Seite des ringförmigen Zwischenelements und der entsprechende Reifenwulst an der anderen Seite des ringförmigen Zwischenelements jeweils mit Druck angepresst anliegen.

Der Notlaufeinsatz wird damit bei einem Zwischenelement einseitig von der entsprechenden Reifenwulst und bei zwei Zwischenelementen beidseitig von den beiden Reifenwülsten entkoppelt und kann auf der Felge "schlupfen" bzw. gleiten. Durch das Beadlock-System ist gleichwohl ein sicherer Sitz der entsprechenden Reifenwulst an der Felge gegeben. Bei Geländefahrten mit vermindertem Luftdruck oder aber bei einem eingetretenen Notfall aufgrund eines Reifendefekts wird vermieden, dass Schmutz zwischen Felgenschulter und Reifenwulst eintreten kann, was zu einem vorzeitigen Gesamtausfall führen könnte.

Die Materialstärke des Zwischenelements kann dabei vorzugsweise bei 2 bis 5 mm liegen, es sind aber auch höhere oder niedrigere Materialstärken möglich. Das ringförmige Zwischenelement kann dabei - entsprechend der Ausgestaltung des Reifenwulst - leicht schräg angestellt sein. Dies kann ebenfalls für den zugeordneten seitlichen Endpunkt des Querbalkens des Notlaufeinsatzes oder sogar beide seitlichen Endpunkte gelten.

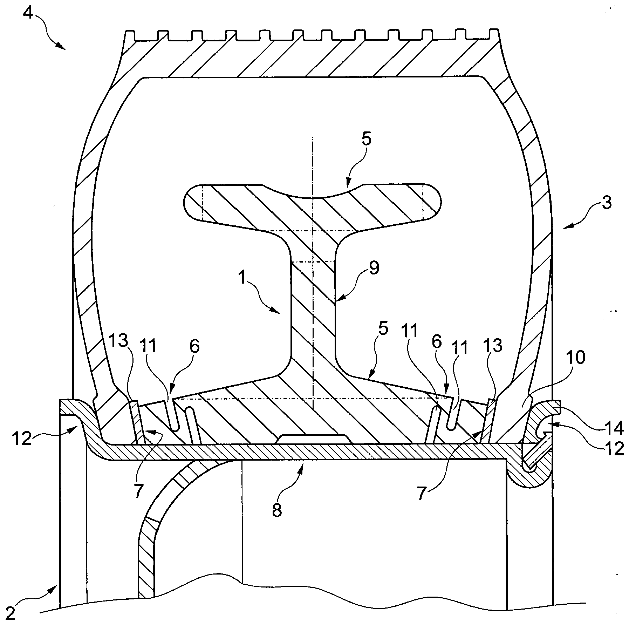

Im Folgenden wird ein in der Zeichnung dargestelltes Ausführungsbeispiel der Erfindung erläutert. Die einzige Figur zeigt den Querschnitt eines Teilelementes eines verspannbaren Notlaufeinsatzes 1, wobei der Notlaufeinsatz 1 aus drei kreisringsegmentförmigen Teilelementen besteht. Aneinandergrenzende Teilelemente sind jeweils entweder gelenkig miteinander verbunden oder über ein Spannsystem miteinander verspannbar.

Der Notlaufeinsatz 1 ist bestimmt für ein Kraftfahrzeugrad, welches aus einer in der Zeichnung nicht dargestellten Felge 2 mit Felgenbett 8 und seitlichen Felgenschultern 12 sowie einem in der Zeichnung ebenfalls nicht gezeigten luftgefüllten Reifen 3 besteht, wobei der Reifen 3 beidseitig jeweils eine Reifenwulst 10 hat und mit diesen beiden Reifenwülsten 10 auf der Felge 2 angeordnet ist und an den Felgenschultern 12 anliegt.

Wie in der Figur gezeigt, ist der Querschnitt der Teilelemente reifenseitig T-förmig ausgebildet, wobei der obere Querbalken 5 der T-förmigen Ausgestaltung als Lauffläche für den Reifen 3 bei einem Reifendefekt dient. Weiterhin ist der Querschnitt der Teilelemente felgenseitig in etwa T-förmig mit zwei seitlichen Endpunkten 7 ausgebildet, wobei der Querbalken 5 der T-förmigen Ausgestaltung zur Montage auf dem Felgenbett 8 dient und in montiertem Zustand auf diesem aufliegt.

Die reifenseitige T-förmige Ausgestaltung und die felgenseitige T-förmige Ausgestaltung sind über einen radial verlaufenden Steg 9 miteinander verbunden.

Zwischen den beiden Endpunkten 7 des Querbalkens 5 ist beidseitig jeweils ein elastisch ausgeprägter Teilbereich 6 vorgesehen, wodurch die seitlichen Endpunkte 7 des Querbalkens 5 der felgenseitigen T-förmigen Ausgestaltung gegen eine Rückstellkraft aufeinander zu verlagerbar sind.

Bei montiertem Reifen 3 sind die Reifenwülste 10 somit durch den insoweit resultierenden Anpressdruck seitens der seitlichen Endpunkte 7 des Querbalkens 5 der felgenseitigen T-förmigen Ausgestaltung sicher an der jeweiligen Felgenschulter 12 gehalten.

Dabei sind die elastisch ausgeprägten Teilbereiche 6 jeweils als ein mäanderförmig verlaufenden Federbereich ausgebildet, der durch zwei entgegengesetzt verlaufende, schräg angestellte Einschnitte 11 gebildet ist. Der Federbereich verläuft dabei entlang der Längserstreckung des Notlaufeinsatzes 1.

Die Felge 2 ist auf der rechten Seite mit einem Beadlock-System versehen, welches u. a. einen die rechte Felgenschulter 12 bildenden Ring 14 umfasst.

Beidseitig ist jeweils zwischen dem jeweiligen seitlichen Endpunkt 7 des Querbalkens 5 der felgenseitigen T-förmigen Ausgestaltung der Teilelemente und dem jeweiligen entsprechenden angrenzenden Reifenwulst 10 ein ringförmiges Zwischenelement 13 vorgesehen. Damit liegen zum einen die seitlichen Endpunkte 7 des Querbalkens 5 der felgenseitigen T-förmigen Ausgestaltung der Teilelemente jeweils an der einen Seite des entsprechenden ringförmigen Zwischenelements 13 mit Druck angepresst an, und zum anderen liegen die entsprechende Reifenwülste 10 jeweils an der anderen Seite des jeweils entsprechenden ringförmigen Zwischenelements 13 mit Druck angepresst an. Die Reibung, welche bei direktem Anliegen des Notlaufeinsatzes 1 an den Reifenwülsten 10 resultieren würde, wird somit vermieden, so dass der Notlaufeinsatz innerhalb des Reifens 3 auf der Felge 2 gleiten kann.

## Patentansprüche

1. Verspannbarer Notlaufeinsatz (1) für ein aus einer Felge (2) und einem luftgefüllten Reifen (3), der beidseitig jeweils eine Reifenwulst (10) hat und mit diesen beiden Reifenwülsten (10) auf der Felge (2) angeordnet ist, bestehendes Kraftfahrzeugrad (4), mit wenigstens zwei, insbesondere drei, kreisringsegmentförmigen Teilelementen, wobei aneinandergrenzende Teilelemente jeweils entweder gelenkig miteinander verbunden sind oder über ein Spannsystem miteinander verspannbar sind, wobei der Querschnitt der Teilelemente reifenseitig T-förmig ausgebildet ist, wobei der Querbalken (5) der T-förmigen Ausgestaltung als Lauffläche für den Reifen (3) bei einem Reifendefekt dient und der Querschnitt der Teilelemente felgenseitig in etwa T-förmig mit zwei seitlichen Endpunkten ausgebildet ist, wobei der Querbalken (5) der T-förmigen Ausgestaltung zur Montage auf dem Felgenbett (8) dient und in montiertem Zustand auf diesem aufliegt, wobei die reifenseitige T-förmige Ausgestaltung und die felgenseitige T-förmige Ausgestaltung, insbesondere über einen radial verlaufenden Steg (9), miteinander verbunden sind, wobei die seitlichen Endpunkte des Querbalkens (5) der felgenseitigen T-förmigen Ausgestaltung durch zumindest einen zwischen den beiden Endpunkten des Querbalkens (5) vorgesehenen, elastisch ausgeprägten Teilbereich (6) gegen eine Rückstellkraft aufeinander zu verlagerbar sind, wobei zumindest ein elastisch ausgeprägter Teilbereich (6) als ein mäanderförmig verlaufenden Federbereich ausgebildet ist, **dadurch gekennzeichnet, dass** der mäanderförmig verlaufende Federbereich durch zumindest zwei jeweils entgegengesetzt verlaufende, vorzugsweise schräg angestellte, Einschnitte (11) gebildet ist, und wobei entweder
das Material der Teilelemente eine Bruchfestigkeit von 20 bis 60 MPa, insbesondere von 47 MPa, aufweist und/oder eine Härte von 50 bis 80 Shore D, insbesondere von 74 Shore D, hat
und/oder
die Strecke der Verlagerung der beiden Endpunkte des Querbalkens (5) gegen die Rückstellkraft aufeinander zu 2 bis 20 mm, vorteilhafterweise 4 bis 16 mm und vorzugsweise 6 bis 12 mm, beträgt.

2. Verspannbarer Notlaufeinsatz (1) nach einem der vorhergehenden Ansprüche, **dadurch gekennzeichnet, dass** die Teilelemente aus einem Gussmaterial, insbesondere aus Kunststoff und/oder aus einem Kompositwerkstoff, bestehen.

3. Verspannbarer Notlaufeinsatz (1) nach einem der vorhergehenden Ansprüche, **dadurch gekennzeichnet, dass** das Material der Teilelemente ein Zug-E-Modul von 1000 bis 2000 MPa, insbesondere von 1512 MPa, hat und/oder eine Bruchdehnung von 100 bis 400 %, insbesondere von 270 %, aufweist.

4. Verspannbarer Notlaufeinsatz (1) nach einem der vorhergehenden Ansprüche, **dadurch gekennzeichnet, dass** zumindest die Querbalken (5) der felgenseitigen T-förmigen Ausgestaltung der Teilelemente, vorzugsweise die gesamten Teilelemente, in denjenigen Endbereichen ihrer Längserstreckung, in denen sie miteinander verbunden und/oder verspannt sind, eine geringere Breite aufweisen als in den restlichen zwischen diesen Endbereichen liegenden Bereichen.

5. Verspannbarer Notlaufeinsatz (1) nach dem vorhergehenden Anspruch, **dadurch gekennzeichnet, dass** die geringere Breite 2 bis 20 mm, vorteilhafterweise 4 bis 16 mm und vorzugsweise 6 bis 12 mm, beträgt.

6. Kraftfahrzeugrad (4) mit einer Felge (2), mit einem luftgefüllten Reifen (3), der beidseitig jeweils eine Reifenwulst (10) hat und mit diesen beiden Reifenwülsten (10) auf der Felge (2) angeordnet ist, und mit einem innerhalb des Reifens (3) auf der Felge (2) angeordneten verspannbaren Notlaufeinsatz (1), **dadurch gekennzeichnet, dass** der Notlaufeinsatz (1) nach einem der vorhergehenden Ansprüche ausgebildet ist.

7. Kraftfahrzeugrad (4) nach dem vorhergehenden Anspruch, **dadurch gekennzeichnet, dass** die Felge (2) mit einem Beadlock-System versehen ist.

8. Kraftfahrzeugrad (4) nach Anspruch 6 oder 7, **dadurch gekennzeichnet, dass** die Felge (2) eine mehrteilige Flachbettfelge ist.

9. Kraftfahrzeugrad (4) nach einem der vorhergehenden Ansprüche 6 bis 8, **dadurch gekennzeichnet, dass** die seitlichen Endpunkte (7) des Querbalkens (5) der felgenseitigen T-förmigen Ausgestaltung der Teilelemente jeweils an der entsprechenden Reifenwulst (10) mit Druck angepresst anliegen.

10. Kraftfahrzeugrad (4) nach einem der Ansprüche 6 bis 9, **dadurch gekennzeichnet, dass** zumindest zwischen einem der beiden seitlichen Endpunkte (7) des Querbalkens (5) der felgenseitigen T-förmigen Ausgestaltung der Teilelemente und der jeweiligen entsprechenden angrenzenden Reifenwulst (10) ein ringförmiges, vorzugsweise aus Edelstahl oder einem Polyolefin bestehendes, Zwischenelement (13) vorgesehen ist, wobei die seitlichen Endpunkte (7) des Querbalkens (5) der felgenseitigen T-förmigen Ausgestaltung der Teilelemente jeweils an der einen Seite des ringförmigen Zwischenelements (13) und der entsprechende Reifenwulst (10) an der anderen Seite des ringförmigen Zwischenelements (13) jeweils mit Druck angepresst anliegen.

## Claims

1. Tensionable run-flat tyre support insert (1) for a motor vehicle wheel (4) which consists of a rim (2) and an air-filled tyre (3), which in each case has a tyre bead (10) on both sides and is arranged with these two tyre beads (10) on the rim (2), with at least two, and in particular three, circular ring segment-shaped part elements, wherein mutually adjacent part elements are in each case either connected to one another in jointed manner or can be tensioned to one another by means of a tensioning system, wherein
the cross-section of the part elements on the tyre-side is configured as T-shaped, wherein the crossbar (5) of the T-shaped configuration serves as a running surface for the tyre (3) in the event of a tyre defect, and the cross-section of the part elements on the rim-side is configured as approximately T-shaped with two lateral end-points, wherein the crossbar (5) of the T-shaped configuration serves for the mounting on the rim base or rim well (8), and in the mounted state lies on this, wherein the tyre-side T-shaped configuration and the rim-side T-shaped configuration are connected to one another, in particular by a web (9) running radially, wherein the lateral end-points of the crossbar (5) of the rim-side T-shaped configuration can be displaced onto one another against a resetting force by means of at least one elastically formed part region (6) provided between the two end-points of the crossbar (5), wherein at least one elastically formed part region (6) is configured as a spring region running in meander-fashion, **characterised in that**
the spring region running in meander-fashion is formed by at least two intercuts (11) running opposed to one another and preferably arranged obliquely, and wherein either the material of the part elements exhibit a breaking strength of 20 to 60 MPa, in particular of 47 MPa, and/or a hardness of 50 to 80 Shore D, in particular of 74 Shore D,
and/or
the stretch distance of the displacement of the two end-points of the crossbar (5) against the resetting force to one another is between 2 to 20 mm, advantageously 4 to 16 mm, and preferably 6 to 12 mm.

2. Tensionable run-flat tyre support insert (1) according to one of the preceding claims, **characterised in that** the part elements consist of a cast material, in particular of plastic and/or a composite material.

3. Tensionable run-flat tyre support insert (1) according to any one of the preceding claims, **characterised in that** the material of the part elements exhibits a tensile modulus of elasticity of 1000 to 2000 MPa, in particular of 1512 MPa, and/or an elongation at break of 100 to 400%, in particular of 270%.

4. Tensionable run-flat tyre support insert (1) according to any one of the preceding claims, **characterised in that** at least the crossbars (5) of the rim-side T-shaped configuration of the part elements, preferably the whole of the part elements, exhibit a lesser width in those end regions of their longitudinal extension in which they are connected and/or tensioned to one another than in the remaining regions lying between these end regions.

5. Tensionable run-flat tyre support insert (1) according to the preceding claim, **characterised in that** the lesser width amounts to 2 to 20 mm, advantageously 4 to 16 mm, and preferably 6 to 12 mm.

6. Motor vehicle wheel (4) with a rim (2), with an air-filled tyre (3) which in each case has a tyre bead (10) on both sides and is arranged with these two tyre beads (10) on the rim (2), and with a tensionable run-flat tyre support insert (1) arranged inside the tyre (3) on the rim (2), **characterised in that** the run-flat tyre support insert (1) is configured in accordance with any one of the preceding claims.

7. Motor vehicle wheel (4) according to the preceding claim, **characterised in that** the rim (2) is provided with a Beadlock system.

8. Motor vehicle wheel (4) according to claim 6 or 7, **characterised in that** the rim (2) is a multipart flat base or well rim.

9. Motor vehicle wheel (4) according to any one of the preceding claims 6 to 8, **characterised in that** the lateral end-points (7) of the crossbar (5) of the rim-side T-shaped configuration of the part elements is in each case pressed under pressure to the corresponding tyre bead (10).

10. Motor vehicle wheel (4) according to any one of the preceding claims 6 to 9, **characterised in that,** at least between one of the two lateral end-points (7) of the crossbar (5) of the rim-side T-shaped configuration of the part elements and of the respective adjacent tyre bead (10), a ring-shaped intermediate element (13) is provided, consisting preferably of special steel or a polyolfin, wherein the lateral the lateral end-points (7) of the crossbar (5) of the rim-side T-shaped configuration of the part elements are in each case in contact, pressed under pressure, on the one side of the ring-shaped intermediate element (13), and with the corresponding tyre bead (10) on the other side of the ring-shaped intermediate element (13).

## Revendications

1. Pièce intégrée blocable (1) de roulement d'urgence, destinée à une roue (4) de véhicule automobile composée d'une jante (2) et d'un pneumatique (3) rempli d'air qui est doté d'un bourrelet respectif (10), de part et d'autre, et est mis en place sur ladite jante (2) par ces deux bourrelets (10), comprenant au moins deux, en particulier trois éléments partiels en forme d'anneaux circulaires, sachant que des éléments partiels limitrophes sont reliés mutuellement de manière articulée ou peuvent, respectivement, être solidarisés par blocage au moyen d'un système de blocage, la section transversale des éléments partiels étant configurée en T, côté pneumatique, la barre transversale (5) de ladite configuration en T servant de surface de roulement dévolue au pneumatique (3) en cas de défaillance de celui-ci, et la section transversale desdits éléments partiels présentant, côté jante, une configuration sensiblement en T comportant deux points latéraux d'extrémité, sachant que la barre transversale (5) de ladite configuration en T sert au montage sur l'embase (8) de la jante et repose sur cette dernière à l'état monté, la configuration en T située côté pneumatique, et la configuration en T située côté jante, étant notamment reliées l'une à l'autre par l'intermédiaire d'une membrure (9) s'étendant dans le sens radial, sachant que les points latéraux d'extrémité de la barre transversale (5) de ladite configuration en T située côté jante peuvent être déplacés en direction l'un de l'autre, en opposition à une force de rappel, par l'intermédiaire d'au moins une région partielle (6) douée d'élasticité prononcée, prévue entre les deux points d'extrémité de ladite barre transversale (5), au moins une région partielle (6) à élasticité prononcée étant réalisée en tant que région élastique à étendue décrivant des méandres, **caractérisée par le fait que** la région élastique, s'étendant en décrivant des méandres, est constituée d'au moins deux entailles (11) orientées de préférence à l'oblique, s'étendant dans des directions respectivement opposées, sachant que
le matériau des éléments partiels présente une résistance à la rupture de 20 à 60 MPa, en particulier de 47 MPa, et/ou une dureté de 50 à 80 Shore D, en particulier de 74 Shore D,
et/ou que
le trajet de déplacement des deux points d'extrémité de la barre transversale (5) en direction l'un de l'autre, en opposition à la force de rappel, mesure de 2 à 20 mm, avantageusement de 4 à 16 mm, et préférentiellement de 6 à 12 mm.

2. Pièce intégrée blocable (1) de roulement d'urgence, selon l'une des revendications précédentes, **caractérisée par le fait que** les éléments partiels consistent en un matériau coulé, notamment en une matière plastique et/ou en un matériau composite.

3. Pièce intégrée blocable (1) de roulement d'urgence, selon l'une des revendications précédentes, **caractérisée par le fait que** le matériau des éléments partiels présente un module d'élasticité en traction de 1 000 à 2 000 MPa, en particulier de 1 512 MPa, et/ou un allongement à la rupture de 100 à 400 %, en particulier de 270 %.

4. Pièce intégrée blocable (1) de roulement d'urgence, selon l'une des revendications précédentes, **caractérisée par le fait qu'**au moins les barres transversales (5) de la configuration en T des éléments partiels, située côté jante, de préférence l'intégralité desdits éléments partiels présentent, dans les régions extrêmes de leur étendue longitudinale dans lesquelles ils sont reliés les uns aux autres et/ou solidarisés par blocage, une moindre largeur que dans les régions restantes interposées entre ces régions extrêmes.

5. Pièce intégrée blocable (1) de roulement d'urgence, selon la revendication précédente, **caractérisée par le fait que** la largeur moindre mesure de 2 à 20 mm, avantageusement de 4 à 16 mm, et préférentiellement de 6 à 12 mm.

6. Roue (4) de véhicule automobile, comprenant une jante (2), un pneumatique (3) empli d'air qui est doté d'un bourrelet respectif (10), de part et d'autre, et est mis en place sur ladite jante (2) par ces deux bourrelets (10), et une pièce intégrée blocable (1) de roulement d'urgence, logée à l'intérieur dudit pneumatique (3) et disposée sur ladite jante (2), **caractérisée par le fait que** la pièce intégrée (1) de roulement d'urgence est réalisée en conformité avec l'une des revendications précédentes.

7. Roue (4) de véhicule automobile, selon la revendication précédente, **caractérisée par le fait que** la jante (2) est pourvue d'un système Beadlock.

8. Roue (4) de véhicule automobile, selon la revendication 6 ou 7, **caractérisée par le fait que** la jante (2) est une jante à embase plate, en plusieurs parties.

9. Roue (4) de véhicule automobile, selon l'une des revendications 6 à 8 précédentes, **caractérisée par le fait que** les points latéraux d'extrémité (7) de la barre transversale (5) de la configuration en T des éléments partiels, située côté jante, sont respectivement en applique, avec pression, contre le bourrelet correspondant (10) du pneumatique.

10. Roue (4) de véhicule automobile, selon l'une des revendications 6 à 9, **caractérisée par le fait qu'**un élément annulaire intercalaire (13), consistant de préférence en de l'acier fin ou en une polyoléfine, est prévu au moins entre l'un des deux points latéraux d'extrémité (7) de la barre transversale (5) de la configuration en T des éléments partiels, située côté jante, et le bourrelet attenant (10) du pneumatique respectivement correspondant, lesdits points latéraux d'extrémité (7) de la barre transversale (5) de ladite configuration en T des éléments partiels, située côté jante, et ledit bourrelet correspondant (10) du pneumatique, étant respectivement en applique, avec pression, contre l'un des côtés de l'élément annulaire intercalaire (13) et contre l'autre côté dudit élément annulaire intercalaire (13).
